# EUROPÄISCHE PATENTANMELDUNG

(11) **EP 0 525 319 A2**
(43) Veröffentlichungstag der Anmeldung: **03.02.1993**
(21) Anmeldenummer: 92108519.7
(22) Anmeldetag: 20.05.1992
(51) Int. Cl.: H04L 12/42, G06F 13/38

(54) **Datenübertragungssystem**

(30) Priorität: 25.07.1991 DE 4124733
(71) Anmelder: PETERS & ZABRANSKY INGENIEURGESELLSCHAFT mbH, D-80333 München (DE)
(72) Erfinder: Grimm, Andreas, Dipl.-Math., W-8000 München 90 (DE)
(74) Vertreter: Strasser, Wolfgang, Dipl.-Phys

(57) **Zusammenfassung**

Bei einem Datenübertragungssystem (1), das eine Vielzahl von Modulen (2, 4, 5, 6) umfaßt, die zum Senden und/oder Empfangen kodierter Signale ausgebildet und miteinander durch einen Datenbus (8) verbunden sind, und bei dem für einen Daten- übertragungsvorgang ein erstes Modul (2), das als Initiator auftritt, durch Aussenden eines kodierten Signals wenigstens eines der anderen Module (4, 5, 6) aus einem ersten (Z_{B}) in einen zweiten Zustand (Z_{A}) versetzt, in welchem dieses Modul (4, 5, 6) kodierte Signale für eine Verarbeitung empfangen und/oder selbst kodierte Signale aussenden kann, ist zur Vereinfachung des hardwaremäßigen Aufwandes und zur Vermeidung von Protokolldaten vorgesehen, daß ein Modul im zweiten Zustand zum Dekodieren empfangener Signale und/oder zum Kodieren auszusendender Signale einen anderen Kode verwendet als im ersten Zustand.

## Beschreibung

Die Erfindung betrifft ein Datenübertragungssystem der im Oberbegriff des Anspruches I genannten Art.

Solche Systeme, Wie sie beispielsweise aus der DE-OS 39 42 661 bekannt sind, umfassen häufig ein Modul, das aufgrund seiner hard- und softwaremäßigen Ausstattung den anderen als "Master" hierarchisch übergeordnet ist und die zentrale Steuerung des gesamten Systems durchführt, wobei es insbesondere als Initiator von Datenübertragungsvorgängen auftritt, die zwischen ihm und einem von ihm selektierten "Slave"-Modul und/oder zwischen zwei oder mehr selektierten "Slave"-Modulen stattfinden sollen.

Alternativ hierzu können aber auch mehrere oder alle Module eines Systems mit einer "Intelligenz" ausgestattet sein, die es jedem von ihnen erlaubt, nach einem vorgegebenen Programmablauf oder in gegenseitiger Absprache die Master-Funktion für bestimmte Zeiträume zu übernehmen, während derer sich ihm die übrigen Module als "Pseudo-Slaves" unterordnen.

Unabhängig von diesen verschiedenen Möglichkeiten arbeiten bekannte Systeme im allgemeinen so, daß das (momentane) Master-Modul zunächst ein kodiertes Reset-Signal an alle (momentanen) Slave-Module aussendet, das diese in einen "Bereitschaftszustand" versetzt, in dem sie selbst keine weiteren Aktivitäten entfalten können, sondern nur auf ein vom Master kommendes, als Adressensignal dienendes kodiertes Signal warten, das sie während des Empfangs oder unmittelbar danach dekodieren und mit der bei ihnen gespeicherten, individuellen Adresse vergleichen. Dasjenige Slave-Modul, dessen Adresse mit dem dekodierten Adressensignal übereinstimmt, geht in einen "aktivierten" Zustand über, in dem es weitere kodierte Signale vom Master oder einem anderen Slave aufnehmen und dekodieren und/oder selbst Daten in Form kodierter Signale an den Master und/oder einen anderen Slave aussenden kann.

Der Datenbus, der die Module eines solchen Systems miteinander verbindet, kann auf verschiedenste Weise realisiert sein. Im einfachsten Fall besteht er aus einem einzigen Kanal, der beispielsweise von der Ader eines Kabels, einem Lichtleiter, einer Funkstrecke oder einem Infrarot- oder Ultraschall-Wellenfeld gebildet wird und auf dem die kodierten Signale zeitlich nacheinander, d.h. rein seriell übertragen werden. Alternativ hierzu kann der Datenbus auch mehrere, für eine parallele Signalübertragung geeignete Kanäle aufweisen, die entweder von einer entsprechenden Anzahl von Kabeladern und/oder Lichtleitern gebildet werden oder durch bekannte Modulationsverfahren auf ein und denselben Träger aufgeprägt sind.

Unabhängig von der konkreten Ausführungsform ist allen derartigen Systemen, bei denen prinzipiell mehrere Module Sendezugriff zum gemeinsamen Datenbus besitzen, das Problem gemeinsam, daß zu jedem gegebenen Zeitpunkt immer nur eines der Module senden darf und daß allen übrigen Teilnehmern klar sein muß, von wem die gerade empfangenen Signale stammen, damit ein einwandfreier Informationsaustausch gewährleistet ist. Wenn der Master einen Slave selektiert hat und an diesen weitere kodierte Signale überträgt, die beispielsweise Befehle zur Ausführung bestimmter Funktionen oder zur Information des Slaves dienende Daten beinhalten können, besteht insbesondere die Gefahr, daß andere, nicht selektierte Slaves diese kodierten Signale als Adressensignale mißverstehen und daher ebenfalls in den selektierten Zustand übergehen. Dies kann dazu führen, daß sie nicht an sie gerichtete Befehle ausführen bzw. nicht für sie bestimmte Daten einspeichern und/oder in Zeiträumen zu senden beginnen, in denen der eigentlich selektierte Slave senden soll, so daß auf dem Datenbus ein nicht mehr entwirrbares Gemisch von Signalen entsteht.

Zur Lösung dieses generellen Problems sind aus dem Stand der Technik verschiedene Vorgehensweisen bekannt. Eine der häufigsten, wie sie auch der DE-OS 39 42 661 entnehmbar ist, besteht in der Verwendung von sogenannten Protokollen. Dabei werden den zwischen zwei Modulen auszutauschenden "nicht vorhersagbaren" Daten zusätzliche, vorher festgelegte bzw. verabredete "vorhersagbare" Daten vorangestellt und/oder angehängt bzw. zwischengeschaltet, die lediglich der Organisation dienen, d.h. die verschiedenen Arten von nicht vorhersagbaren Daten kennzeichnen und insbesondere den momentanen Sender eindeutig identifizieren. Dies soll es dem Empfänger ermöglichen, die nicht vorhersehbaren Daten richtig zu interpretieren und die Sendeberechtigung des Senders zu überprüfen. Solche mit Protokollen arbeitende Datenübertragungssysteme können zwar ein hohes Maß an Zuverlässigkeit erreichen, doch muß dafür eine starke Verminderung der effektiven Datenübertragungsgeschwindigkeit vor allem dann in Kauf genommen werden, wenn die eigentlich interessierenden nicht vorhersagbaren Daten nur aus einigen wenigen Bits bestehen. Der Anteil der Protokolldaten an den insgesamt übertragenen Daten kann bis zu 40 % und mehr betragen. Dies bedeutet, daß hardwaremäßig eine wesentlich größere Übertragungsgeschwindigkeit zur Verfügung gestellt werden muß, als für die eigentlich interessierenden Informationen benötigt wird. Damit werden solche bekannten Systeme häufig so aufwendig, daß sie für viele Anwendungsfälle nicht mehr in Frage kommen.

Demgegenüber liegt der Erfindung die Aufgabe zugrunde, ein Datenübertragungssystem der eingangs genannten Art so weiterzubilden, daß eine sichere Datenübertragung mit einem möglichst geringen Aufwand sowohl an Hardware als auch an "Protokolldaten" durchgeführt werden kann.

Zur Lösung dieser Aufgabe sieht die Erfindung die im Anspruch 1 zusammengefaßten Merkmale vor.

Somit wird gemäß der Erfindung die in jedem der Module eines solchen Systems ohnehin vorhandene Kodier-Dekodier-Einrichtung so ausgebildet, daß sie ein und dieselben Daten vor dem Senden und nach dem Empfang bzw. während des Sendens und Empfangens mit mehreren Kodes kodieren bzw. dekodieren kann, die voneinander so verschieden sind, daß eine Verwechslung von Daten, die mit einem Kode kodiert wurden, mit Daten, zu deren Kodierung ein anderer Kode herangezogen wurde, ausgeschlossen ist.

Wesentlich ist dabei, daß das Umschalten der Kodier-Dekodier-Einrichtungen der einzelnen Module dann geschieht, wenn die Module ihren Zustand ändern. Nimmt man z.B. an, daß sich alle Module im Bereitschaftszustand befinden, so sind ihre Kodier-Dekodier-Einrichtungen alle auf ein und denselben Kode eingestellt, der auch vom jeweiligen Master bei der Aussendung der Adresse eines zu selektierenden Signals verwendet wird. Alle Slaves können somit dieses Adressensignal verstehen und mit der bei ihnen gespeicherten individuellen Adresse vergleichen. Dasjenige Slave-Modul, das aufgrund der Übereinstimmung des Adressensignals mit seiner individuellen Adresse in den aktivierten Zustand übergeht, schaltet dabei gleichzeitig seine Kodier-Dekodier-Einrichtung auf einen anderen Kode um, während alle anderen Slaves beim bisherigen Kode bleiben. Da der Master "weiß", daß das selektierte Modul nunmehr einen anderen Kode verwendet, kann er alle Daten- und Befehlssignale, die für dieses selektierte Modul bestimmt sind, vor dem oder beim Senden mit diesem anderen Kode kodieren, so daß die übrigen Module nicht in der Lage sind, diese Signale logisch zu verarbeiten. Umgekehrt kann der Master Signale, die nur für die im Bereitschaftszustand verbliebenen Module nicht aber für das selektierte Modul bestimmt sind, vor dem oder beim Aussenden weiterhin mit dem ersten Kode kodieren, so daß das selektierte Modul nicht zu reagieren vermag. Da auch die vom selektierten Modul an den Master zurückgesandten Daten mit dem dem aktivierten Zustand entsprechenden Kode kodiert sind, können sie ebenfalls von den im Bereitschaftszustand verbliebenen Modulen nicht in der Weise verstanden bzw. mißverstanden werden, daß diese eine unerwünschte Reaktion zeigen. Nur der Master ist in der Lage, diese mit dem geänderten Kode verschlüsselten Daten zu entschlüsseln zu verwerten.

Diese für den Übergang vom Bereitschaftszustand zum aktivierten Zustand gemachten Ausführungen gelten in entsprechender Weise auch für alle anderen Zustandsänderungen, zu denen die Module eines solchen Systems in der Lage sind und für die jeweils ein eigener Kode vorgesehen wurde.

Diese erfindungsgemäßen Maßnahmen sind nicht nur auf einkanalige Datenbusse beschränkt sondern können mit besonderem Vorteil eingesetzt werden, wenn ein Datenbus vorhanden ist, der mehrere Kanäle umfaßt, auf denen parallel zueinander verschiedene Signale übertragen werden können. In einem solchen Fall ist es möglich, bereits kodierte, seriell zu übertragende Daten für die Übertragung in einem erfindungsgemäßen System nochmals parallel zu kodieren, d.h. jeden einzelnen zu übertragenden Signalwert mit Hilfe eines speziellen Kodes, der dann in Abhängigkeit vom Zustand des empfangenden und/oder sendenden Moduls geändert wird, in eine Gruppe von mehreren Signalen umzuformen, die dann gleichzeitig oder nahezu gleichzeitig in die verschiedenen Kanäle des Datenbusses eingespeist werden.

Der hier verwendete Begriff "Kodierung" ist sehr weit gefaßt. Insbesondere bei Datenübertragungssystemen, die ausschließlich zur Übertragung von binären, aus einer Folge von logischen "1 "-und logischen "0"-Werten bestehenden Signalen ausgebildet sind, soll er beispielsweise auch den Fall umfassen, daß wenigstens ein Kanal des Datenbusses als Datenkanal dient, in welchen die zu übertragenden Binär_ Werte seriell eingegeben werden, während wenigstens ein weiterer Kanal als Taktkanal verwendet wird, auf dem vom Sender ausgehende Taktsignale dem Empfänger die Zeitpunkte anzeigen, zu denen er auf dem Datenkanal anliegende Logikpegel übernehmen soll. Für ein solches System kann der erfindungsgemäße Kodewechsel dann beispielsweise in einem Vertauschen von Daten- und Taktkanal, bestehen.

Die Taktsignale können dabei so speziell gewählt werden (beispielsweise zwei in einem sehr kurzen Abstand aufeinanderfolgende Nadelimpulse), daß eine Verwechselung mit (beispielsweise zeitlich wesentlich längeren) Daten-"Impulsen" ausgeschlossen ist.

Alternativ hierzu ist es aber auch möglich, auf der Taktleitung Impulse auszusenden, deren Struktur den Datenimpulsen durchaus ähnlich ist und beispielsweise nur eine bestimmte Flankenart, z.B. die steigende Flanke dieser Taktimpulse als das eigentliche Taktsignal zu verwenden. In einem solchen Fall wird dann erfindungsgemäß dafür gesorgt, daß ein Pegelwechsel auf dem Kanal, der bei Verwendung des bisherigen Kodes der Taktkanal war und aufgrund eines Kodewechsels zum Datenkanal wird, nur dann stattfindet, wenn auf dem "neuen" Taktkanal (der für die im alten Zustand gebliebenen Module immer noch der Datenkanal ist) ein bestimmter vorgegebener Pegel, beispielsweise der "0"-Pegel anliegt. Damit ist sichergestellt, daß die im alten Zustand gebliebenen Module nur eine Folge von logischen "0"-Werten einlesen, die als solche keine weitere Reaktion auslösen können.

Bei einer anderen Variante werden die Binärwerte, die die zu übertragenden Daten darstellen, für den Sendevorgang in mehrere Binärimpulse umgewandelt, von denen jeder in einen der parallelen Kanäle des Datenbusses eingespeist wird. Die verschiedenen Kodes, die je nach Zustand des sendenden und/oder empfangenden Moduls bei dieser Umwandlung zum Einsatz kommen, legen dann unterschiedliche Pegelkombinationen und/oder unterschiedliche zeitliche Reihenfolgen und/oder unterschiedliche Polaritäten von Flanken (steigend oder fallend) fest, durch die die beiden eigentlich zu übertragenden Binärwerte "logisch 1 und "logisch 0" jeweils dargestellt werden.

Es zeigt sich, daß es möglich ist, mit lediglich zwei Kanälen zumindest zwei derartige Kodes anzugeben, die völlig disjunkt sind (und somit nicht verwechselt werden können), eine irrtumsfreie Übertragung eines Reset- und eines Taktsignals erlauben und überdies einen Wechsel von einem der beiden Kodes in den jeweils anderen ermöglichen, der sich eindeutig von allen "Nutz"-Signalen unterscheidet. In entsprechender Weise lassen sich dann, wenn einer größeren Zahl von Modul-Zuständen jeweils ein eigener Kode zugeordnet werden soll, durch die Verwendung von mehr als zwei parallelen Kanälen voneinander völlig disjunkte "Sprachen" definieren, die immer nur von denjenigen Modulen "verstanden" und "benutzt" werden, die sich in dem zugehörigen Zustand befinden.

Die eben erläuterten und weitere vorteilhafte Weiterbildungen eines erfindungsgemäßen Datenübertragungssystems sind in den Unteransprüchen niedergelegt.

Die Erfindung wird im folgenden anhand von Ausführungsbeispielen unter Bezugnahme auf die Zeichnung beschrieben; in dieser zeigen:
Fig. 1 ein Datenübertragungssystem mit exemplarisch festgelegter Master-Slave-Struktur und einem zwei-kanaligen Datenbus,
Fig. 2 eine erste Variante von zwei verschiedenen "Sprachen" oder Kodes, die bei dem Ausführungsbeispiel nach Fig. 1 Verwendung finden können, und
Fig. 3 eine zweite Variante von zwei "Sprachen" oder Kodes, mit denen das Ausführungsbeispiel nach Fig. 1 arbeiten kann.

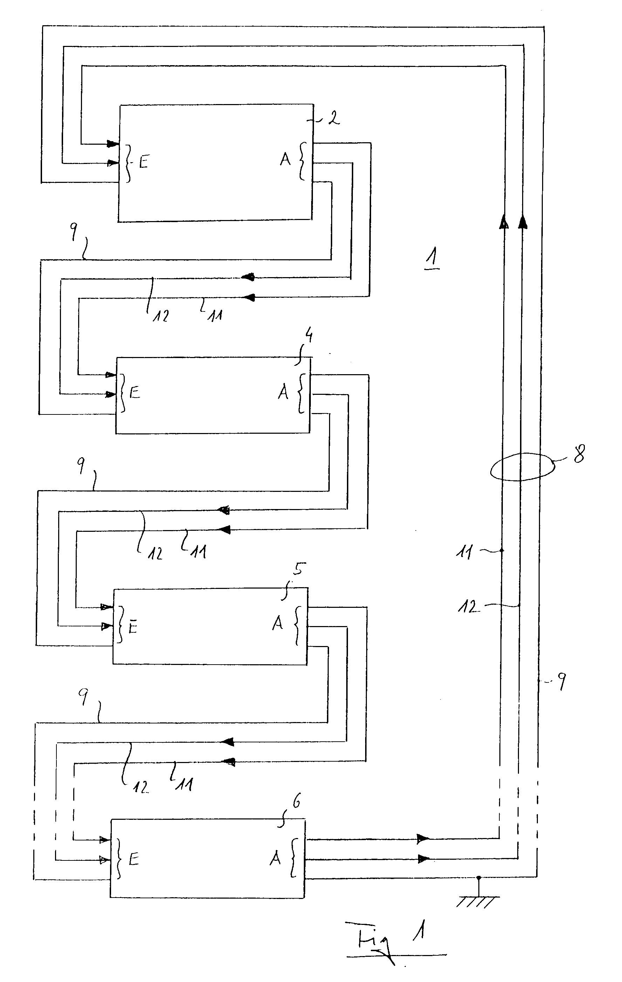

In Fig. 1 ist ein Datenübertragungssystem 1 dargestellt, das eine Vielzahl von Modulen umfaßt, von denen jedoch nur ein Master 2 und drei Slaves 4, 5, 6 wiedergegeben sind. Die Module sind durch einen Datenbus 8 miteinander verbunden, der hier mit Hilfe eines drei-adrigen Kabels realisiert ist, dessen eine Ader als Systemmasse 9 dient, während die beiden anderen Adern Kanäle 11, 12, zur Datenübertragung bilden. Der Datenbus 8 ist unidirektional aufgebaut, d.h. es können Daten nur in einer Richtung übertragen werden, wie dies durch die Pfeile in den Kanälen 11, 12 angedeutet ist. Die Module 2 und 4, 5, 6 sind im Datenbus 8 seriell angeordnet, d.h. jedes der Module besitzt einen Eingang E, an dem die vom Vorgängermodul kommenden Leitungen 9, 11, 12 des Datenbusses 8 enden, und einen Ausgang A, an dem die entsprechenden, zum Nachfolgermodul führenden Leitungen wieder beginnen. Jedes der Slave-Module 4, 5, 6 ist in der Lage, seinen Eingang E mit seinem Ausgang A in der Weise zu verbinden, daß vom Vorgängermodul ankommende Datensignale logisch unverändert an den Nachfolger weitergeleitet werden. Dies schließt eine elektrische Aufbereitung dieser Signale, z.B. das Regenerieren von sich abflachenden Flanken durch Schmitt-Trigger oder eine optoelektronische Entkopplung von Eingang und Ausgang nicht aus.

Trotz der in Fig. 1 einheitlichen Darstellung können die Slave-Module 4, 5, 6 sehr unterschiedlich aufgebaut sein. Ganz allgemein handelt es sich bei ihnen um datenverarbeitende und/oder datenumsetzende Einheiten wie Analoge/Digital- oder Digital/Analog-Wandler, Digital-10-Schnittstellen, Filter, Multiplexer, Datenendeinrichtungen, Verstärker, Stromversorgungen, Ansteuerschaltungen von Motoren, Ventilen, Beleuchtungskörpern, Meßfühlern usw.

Gemeinsam ist allen Slave-Modulen, daß sie unter der Regie des Masters 2 in verschiedene Zustände übergehen können, in denen sie in unterschiedlicher Weise auf vom Master 2 übertragene Befehls- und/oder Datensignale reagieren bzw. nach Anforderung durch den Master 2 selbst Datensignale in den Datenbus 8 einspeisen, die von den Nachfolgern so lange weitergegeben werden, bis sie das vom Master 2 vorgegebene Ziel, das im allgemeinen der Master 2 selbst ist, erreicht haben.

Um einen einwandfreien Ablauf dieses Datenaustausches zu gewährleisten, sind für die Slave-Module 4, 5, 6 folgende Zustände definiert:
1. Ein Bereitschaftszustand Z_{B}, in den alle Module 4, 5, 6 aus jedem beliebigen anderen Zustand gebracht werden, wenn der Master 2 ein Reset-Signal aussendet, das von jedem der Slave-Module in logisch unveränderter Form an seinen Nachfolger weitergegeben wird.

Im Bereitschaftszustand kann jedes der Slave-Module 4, 5, 6 nur auf solche Datensignale reagieren, die in einem im vorliegenden Zusammenhang als "Sprache 1" bezeichneten Kode kodiert sind.

Alle am Eingang E ankommenden Signale werden unabhängig von der "Sprache", mit der sie kodiert sind, logisch unverändert an den Ausgang A übertragen. Eine selbständige Sendeaktivität ist nicht möglich.

2. Einen "aktivierten Zustand" Z_{A}, in den ein Slave-Modul 4, 5 oder 6 nur aus dem Bereitschaftszustand Z_{B} heraus übergehen kann, wenn es im Bereitschaftszustand ein in der Sprache 1 kodiertes Adressen-Signal erhalten hat, das mit der bei ihm gespeicherten individuellen Adresse übereinstimmt.

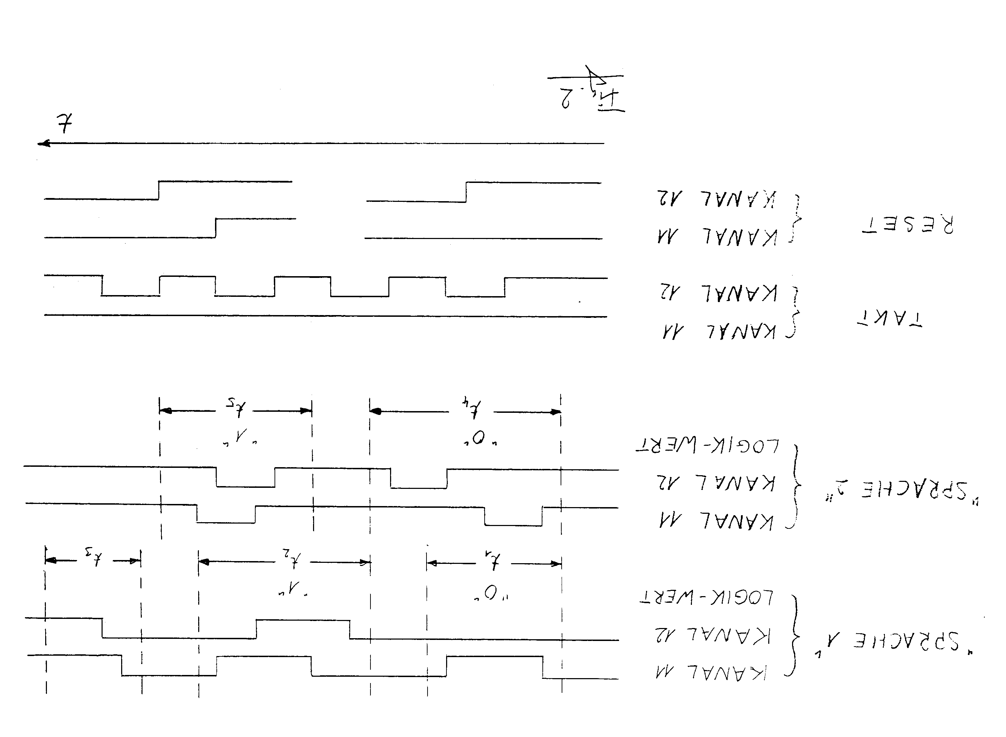

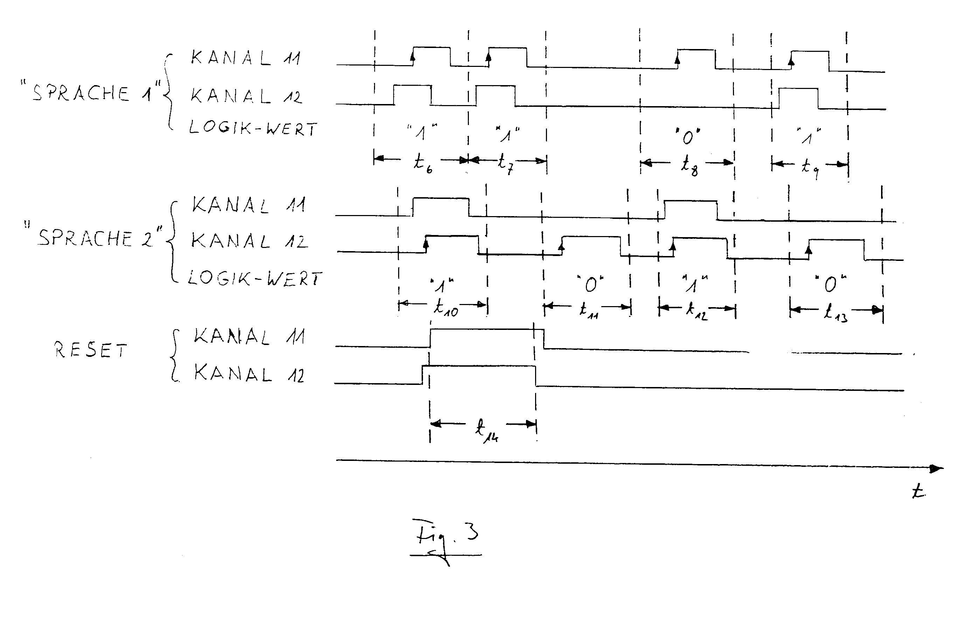

Im aktivierten Zustand Z_{A} kann ein Slave-Modul 4, 5 oder 6 neben den Reset-Signalen nur auf Datensignale reagieren, die mit einem hier als "Sprache 2" bezeichneten weiteren Kode kodiert sind, der sich in unverwechselbarer Weise von dem die Sprache 1 bildenden Kode unterscheidet, wie dies weiter unten unter Bezugnahme auf die Fig. 2 und 3 noch genauer erläutert wird.

Je nachdem, welche Befehle ein aktiviertes Slave-Modul erhält, kann es bei ihm ankommende Datensignale auf unterschiedliche Weise verarbeiten:
a) Es kann diese Datensignale logisch unverändert an seinen Ausgang weitergeben, wobei aber die Möglichkeit besteht, daß es auch selbst auf diese Signale reagiert, indem es z.B. einen nachgeordneten Schalter betätigt oder irgendwelche anderen Funktionen ausführt.
b) Alternativ hierzu kann ein solches Modul im Zustand Z_{A} aufgrund eines entsprechenden Befehls aber auch die bei ihm ankommenden Datensignale für alle "Nachfolger" unterdrücken und diese Signale nur selbst einer weiteren Verarbeitung zuführen.

Eine weitere, durch entsprechende Befehle aufrufbare Möglichkeit eines Moduls im aktivierten Zustand Z_{A} besteht darin, daß dieses Modul 4, 5 oder 6 selbst als Datensender aktiv wird und bei ihm gespeicherte oder in Echtzeit erzeugte Daten an seinem Ausgang A in den Datenbus 8 einspeist. Dabei verwendet ein solches Modul zur Übertragungskodierung dieser Daten ebenfalls die Sprache 2.

Die zentrale Steuerung der gesamten Anordnung, insbesondere die Erzeugung und Aussendung der Reset-, Adressen und sonstigen Aufruf-und Befehlssignale erfolgt durch das Master-Modul 2, das bei dem hier beschriebenen Ausführungsbeispiel auch als einziges Modul einen Taktgenerator besitzt, der für das gesamte System sowohl für den Empfangsals auch für den Sendebetrieb der Slave-Module 4, 5, 6 die Taktsignale liefert.

Um zu den gewünschten Verbesserungen hinsichtlich des hardwaremäßigen Aufwandes und der Reduzierung bzw. Vermeidung von Protokolldaten zu gelangen, werden bei dem beschriebenen System zu übertragende Daten einer zusätzlichen Kodierung unterworfen, wobei in Abhängigkeit vom Zustand des oder der vom Master her angesprochenen Slaves verschiedene Kode oder "Sprachen" verwendet werden, die so disjunkt sind, daß eine Verwechslung oder irrtümliche Interpretation ausgeschlossen ist.

Ein erstes Beispiel für zwei solche "Sprachen", die zwei verschiedenen Zuständen der Slaves zugeordnet sind, ist in Fig. 2 wiedergegeben. Sie zeigt in ihrem oberen, mit "Sprache 1 " gekennzeichneten Bereich einen ersten Kode, mit dem nacheinander auf dem Datenbus 8 zu übertragende Binärwerte "0" und "1 durch spezielle Kombinationen von Binärpegel-Übergängen bzw. Impulsen auf den Kanälen 11, 12 dargestellt werden. Kennzeichnend für diese "Sprache 1 ist dabei, daß vor und nach der Übertragung eines jeden Logikwertes beide Kanäle 11, 12 auf einem "High"-Potential liegen. Hiervon ausgehend wird in der "Sprache 1 ", wie in Fig. 2 im Zeitraum t₁ dargestellt, der Logikwert "0" dadurch übertragen, daß auf Kanal 11 ein "negativer" Impuls erscheint, während der "High"-Pegel des Kanals 12 unverändert bleibt. Demgegenüber erscheint zur Übertragung eines Logik- Wertes "1 ", wie in Fig. 2 für den Zeitraum t₂ dargestellt, auf beiden Kanälen 11, 12 jeweils ein negativer Impuls. Diese beiden Impulse sind zeitlich so ineinander verschränkt, daß zuerst der "High"-Pegel des Kanals 12 und dann der "High"-Pegel auf Kanal 11 auf "Low" übergehen, und daß auch die Rückkehr zum jeweiligen "High"-Pegel zuerst auf Kanal 12 und dann erst auf Kanal 11 erfolgt.

Ganz rechts ist in diesem oberen Bereich der Figur ein Zeitraum t₃ wiedergegeben, der einen Übergang von der "Sprache 1" in die "Sprache 2" darstellt, bei der sich vor und nach der Übertragung eines Logik-Wertes beide Kanäle 11, 12 auf einem "Low"-Pegel befinden. Dieser Sprachwechsel ist dadurch gekennzeichnet, daß ausgehend von zwei "High"-Pegeln erst der Kanal 11 und dann der Kanal 12 auf "low" schalten. Eine solche "Pegel- und Flanken"-Folge kommt bei der Übertragung beliebiger Folgen von Logik-Werten in keiner der beiden hier verwendeten "Sprachen" vor und kann daher nicht mißverstanden werden.

Im mittleren Bereich der Fig. 2 ist der die "Sprache 2" bildende Kode dargestellt, demgemäß ein Logikwert "0", wie für den Zeitraum t₄ gezeigt, durch zwei getrennt nacheinander erscheinende positive Impulse dargestelt wird, von denen zuerst der Impuls auf Kanal 11 und dann der Impuls auf Kanal 12 übertragen wird. Demgegenüber steigt für eine Übertragung eines Logikwertes "1" bei der "Sprache 2" zunächst der "Low"-Pegel des Kanals 12 auf einen "High"-Wert an, worauf kurze Zeit später eine entsprechende steigende Flanke auf dem Kanal 11 erscheint. Die Rückkehr zum "Low"-Pegel erfolgt dann zuerst im Kanal 12 und eine entsprechend kurze Zeit später im Kanal 11. Dies ist im mittleren Teil der Fig. 2 im Zeitraum t₅ dargestellt.

Aus dem eben Gesagten ergibt sich, daß in jeder der beiden "Sprachen" beliebige Folgen von Logik-Werten kodiert werden können, ohne daß eine Pegel- und Flanken-Kombination entsteht, die auch in der jeweils anderen Sprache auftreten kann. Die beiden Sprachen sind also völlig disjunkt.

Entsprechendes gilt auch für die beiden weiteren Signale, die bei einem System gemäß Fig. 1 benötigt werden, nämlich die im unteren Bereich der Fig. 2 dargestellten "Takt"- und "Reset"-Signale. Das Taktsignal, das insbesondere dann benötigt wird, wenn der Master 2 einen angewählten, d.h. im Zustand Z_{A} befindlichen Slave 4, 5 oder 6 bei der Übertragung von Daten an den Master 2 unterstützt, wird hier durch eine Folge von "positiven" Impulsen auf Kanal 12 gebildet, während der Kanal 11 Permanent auf einem "Low"-Pegel bleibt. Insofern entspricht dieses Taktsignal der Sprache 2, als auch bei ihm vor und nach jedem Impuls beide Kanäle auf einem "Low"-Pegel liegen. Dennoch kann eine diesem Taktsignal entsprechende Folge von Pegeln und Flanken in der "Sprache 2" als solche nicht auftreten.

Im untersten Bereich zeigt Fig. 2 zwei verschiedene Realisierungsmöglichkeiten für ein "Reset"-Signal, die sich beide dadurch kennzeichnen, daß auf Kanal 12 ein Übergang von einem "Low"- auf einen "High"-Pegel stattfindet, während der Kanal 11 einen "High"-Pegel zeigt. Eine solche Kombination kommt in keiner der "Sprachen" und auch nicht bei der Übertragung eines Taktsignales vor.

Bei der eben beschriebenen Variante wird deutlich, daß Befehls- und Datensignale, die ohnehin in dem aussendenden Modul in kodierter Form als seriell zu übertragende Folge von Logik-Werten "0" und "1" erzeugt bzw. zur Übertragung bereitgestellt werden, für die Übertragung selbst eine nochmalige Kodierung in der Weise erfahren, daß zueinander parallele Signale erzeugt und auf den Kanälen 11, 12 des Datenbusses 8 übertragen werden. Unter dem Begriff "parallel" soll dabei auch die festgelegte zeitliche Reihenfolge verstanden werden, die ganze Impulse oder einzelne Flanken besitzen, um die verschiedenen Zeichen in den verschiedenen Sprachen eindeutig voneiander zu unterscheiden, wie dies oben erläutert wurde.

Eine andere Möglichkeit der "Parallelkodierung" für die Übertragung von seriell anstehenden Daten wird nun unter Bezugnahm auf Fig. 3 erläutert. Dabei werden ähnlich wie beim Stand der Technik die zu übertragenden Daten als Folge von Binärwerten "0" und "1 auf einen der Kanäle 11 oder 12 gelegt und der andere Kanal für die Übertragung eines Taktsignals verwendet, das hier, wie durch die kleinen Pfeile angedeutet, von steigenden Impulsflanken gebildet wird.

Der wesentliche Unterschied zum Stand der Technik besteht darin, daß nicht einer der beiden Kanäle 11, 12 fest für das Taktsignal reserviert ist und der andere ausschließlich mit den zu übertragenden Daten belegt wird. Vielmehr unterscheiden sich die beiden hier verwendeten Kodes oder "Sprachen" dadurch, daß beispielsweise in der "Sprache 1" der Kanal 11 als "flankensensitiver Kanal" zur Übertragung der Taktsignale dient, während der Kanal 12 als "pegelsensitiver Kanal" die interessierenden Informationen überträgt, und daß umgekehrt bei Verwendung der "Sprache 2" der Kanal 12 flankensensitiv und der Kanal 11 pegelsensitiv ist.

Bei dieser Variante kann die Umschaltbarkeit der "Kodier-Dekodier"-Einrichtungen in den Modulen auf äußerst einfache Weise durch eine steuerbare Schaltlogik realisiert werden, die einmal den Kanal 11 an die flankenempfindlichen Eingänge und den Kanal 12 an die pegelverarbeitenden Eingänge der in den Modulen befindlichen Logikeinheiten legt, und dann, wenn zur anderen "Sprache" übergegangen werden soll, diese Anschlußbelegung gerade vertauscht.

Aus dem eben Gesagten ergibt sich, daß der obere Bereich der Fig. 3 für die Zeiten t₆, t₇ und ts die Übertragung eines Logik-Wertes "1" und für die Zeit t₈ die Übertragung eines Logik-Wertes "0" in der "Sprache 1 " wiedergibt, während für die "Sprache 2" im mittleren Bereich die Übertragung eines Logik-Wertes "1 für die Zeiten t₁₀ und t₁₂ und eine Übertragung des Logik-Wertes "0" für die Zeiten t₁₁ und t₁₃ dargestellt ist.

In beiden Sprachen erfolgt auf dem pegelsensitiven Kanal ein Übergang von "Low" auf "High" nur dann, wenn der flankensensitive Kanal auf "Low" liegt. Dies ist insbesondere bei Verwendung der "Sprache 2" von Bedeutung, die zum Austausch von Daten zwischen dem Master 2 und einem selektierten Slave 4 oder 5 oder 6 dient, der sich im Zustand Z_{A} befindet, während die nicht selektierten Slaves im Zustand Z_{B} geblieben sind, in dem sie weiterhin die "Sprache 1 " verstehen, d.h. weiterhin den Kanal 11 als flankensensitiven Kanal und den Kanal 12 als pegelsensitiven Kanal betrachten. In diesem Zustand könnten sie die eben erwähnten Übergänge von "Low" auf "High" im Kanal 11 als Taktflanken interpretieren. Da beim Auftreten solcher Flanken aber, wie eben erwähnt, auf Kanal 12 immer ein "Low"-Pegel vorhanden ist, lesen die im Zustand Z_{B} gebliebenen Slaves nur Logik-Werte "0" ein, was zu keinen Mißverständnissen führen kann.

Im untersten Bereich zeigt die Fig. 3 ein Reset-Signal, das hier von zwei "positiven" Impulsen gebildet wird, die in etwa gleichzeitig auf den beiden Kanälen 11 und 12 ausgesandt werden. Diese Signalkombination unterscheidet sich von allen in den beiden "Sprachen" möglichen Signalkombinationen dadurch, daß die Zeit t₁₄, während derer auf beiden Kanälen ein "High"-Pegel vorhanden ist, länger ist als der längstmögliche Zeitraum, während dessen eine "1 "-"1 "-Kombination in einer der beiden "Sprachen" auftreten kann.

Zur eindeutigen Identifizierung dieses Reset-Signals besitzt bei dieser Variante jedes Slave-Modul 4, 5, 6 eine Schaltung, mit deren Hilfe es die "Überlänge" dieser beiden gleichzeitig auftretenden "High"-Pegel feststellen kann.

Unabhängig davon, welche Kodierungsform verwendet wird, sieht ein Funktionszyklus eines Datenübertragungssystems 1, wie es in Fig. 1 dargestellt ist, folgendermaßen aus: Zunächst sendet der Master 2 ein Reset-Signal, das alle Slaves 4, 5, 6 unabhängig von ihrem bisherigen Zustand Zₓ in den Bereitschaftszustand Z_{B} versetzt. Da die Slaves 4, 5, 6 in diesem Zustand nur die "Sprache 1 verstehen, sendet der Master ein Adressensignal, das einen zu aktivierenden Slave, beispielsweise den Slave 6 kennzeichnet, in eben dieser Sprache aus.

Jeder der Slaves 4, 5, 6 versteht die so übermittelten Adressensignale und vergleicht sie mit seiner bei ihm gespeicherten individuellen Adresse. Außerdem gibt jeder Slave diese Adressensignale auf beiden Kanälen 11, 12 in logisch unveränderter Form an seinen jeweiligen Nachfolger weiter.

Da bei dem in Fig. 1 gezeigten Ausführungsbeispiel der Datenbus 8 ringförmig geschlossen ist, ist der Master 2 Nachfolger des Slaves 6 und erhält von diesem die von ihm ausgesandte Adresse. Dadurch kann der Master 2 feststellen, daß in keinem der Kanäle 11, 12 des Busses 8 Unterbrechungen vorhanden sind und wie groß die aktuelle Signallaufzeit im System ist. Letzteres kann dazu verwendet werden, um die Übertragungsgeschwindigkeit zu optimieren, weil der Master 2 ermitteln kann, wie lange es dauert, bis ein Slave 4, 5 oder 6 die für ihn bestimmten Daten mit Sicherheit empfangen hat. Da bei dem hier geschilderten Zyklus nur der Slave 6 feststellt, daß die bei ihm gespeicherte Adresse mit dem vom Master 2 empfangenen Adressensignal übereinstimmt, geht er allein in den aktivierten Zustand Z_{A} über, während die anderen Slaves 4, 5 im Bereitschaftszustand Z_{B} bleiben. Wesentlich ist, daß das aktivierte Slave-Modul 6 in seinem neuen Zustand Z_{A} nur noch die "Sprache 2" versteht und der Master 2 dies "weiß", und daher für die folgende Kommunikation mit dem aktivierten Slave 6 nur noch die "Sprache 2" verwendet. Als erstes kann dann der Master 2 eine Folge von Taktsignalen aussenden, die von dem aktivierten Slave 6 als Systemtakt zur Erzeugung und Aussendung eines Identifikationssignales verwendet werden, das beispielsweise seine in der "Sprache 2" kodierte eigene Adresse beinhaltet. Durch den Empfang dieses Identifikationssignals kann der Master 2 überprüfen, daß der ausgewählte Slave 6 im System tatsächlich vorhanden und überdies ordnungsgemäß angewählt worden ist. Auf diese Weise kann das System eine Selbstkonfiguration derart durchführen, daß der Master 2 eine Vielzahl von theoretisch möglichen Adressen aussendet und aus den zurückerhaltenen Identifikationssignalen erkennt, welche Slaveadressen im jeweiligen Bussystem tatsächlich vorhanden sind und welche nicht.

In gewissem Sinn kann man diese Rückübertragung eines Identifikationssignals als Verwendung von Protokoll-Daten interpretieren. Sie stellt aber nur eine zusätzliche Möglichkeit dar, die für den sicheren Ablauf der eigentlichen Datenübertragung nicht unbedingt erforderlich ist und insbesondere nicht bei jeder einzelnen Datenübertragung angewendet werden muß. Somit liegt die besondere Stärke eines erfindungsgemäß aufgebauten Systems darin, daß es zwar prinzipiell ohne die Verwendung von Protokolldaten auskommt, deren Einsatz aber nicht ausschließt.

Nach Erhalt des Identifikationssignals können dann weitere Informationen zwischen dem Master 2 und dem aktivierten Slave 6 ausgetauscht werden, wozu ausnahmslos die "Sprache 2" Verwendung findet. Da diese Sprache von dem im Bereitschaftszustand Z_{B} verbliebenen Slaves 4, 5 nicht verstanden wird, besteht keine Gefahr, daß eines dieser nicht aktivierten Module irgendeine Bitfolge auf den Datenbus 8 irrtümlich als Adressensignal auffaßt, das mit seiner Adresse übereinstimmt, und somit zu einem unerwünschten Zeitpunkt in den aktivierten Zustand Z_{A} übergeht, in dem es durch Aussenden eigener Daten den Datenaustausch zwischen dem Master 2 und dem aktivierten Slave 6 stören könnte.

## Patentansprüche

1. Datenübertragungssystem, das eine Vielzahl von Modulen umfaßt, die zum Senden und/oder Empfangen kodierter Signale ausgebildet und miteinander durch einen Datenbus verbunden sind, und bei dem für einen Daten- übertragungsvorgang ein erstes Modul, das als Initiator auftritt, durch Aussenden eines kodierten Signals wenigstens eines der anderen Module aus einem ersten in einen zweiten Zustand versetzt, in welchem dieses Modul kodierte Signale für eine Verarbeitung empfangen und/oder selbst kodierte Signale aussenden kann, dadurch gekennzeichnet, daß ein Modul (4, 5, 6) im zweiten Zustand (Z_{A}) zum Dekodieren empfangener Signale und/oder zum Kodieren auszusendender Signale einen anderen Kode verwendet als im ersten Zustand (Z_{B}).

2. Datenübertragungssystem nach Anspruch 1, bei dem der Datenbus mehrere Kanäle umfaßt, auf denen gleichzeitig voneinander verschiedene Signale übertragen werden können, dadurch gekennzeichnet, daß ein Modul (2, 4, 5, 6) Informationssignale, die es aussenden soll, unter Verwendung eines Kodes, der von seinem momentanen Zustand (Z_{A}, Z_{B}) und/oder dem momentanen Zustand (Z_{A}, Z_{B}) eines empfangenden Moduls (2, 4, 5, 6) abhängt, zeitlich nacheinander jeweils in eine Gruppe von mehreren Übertragungssignalen umwandelt und die Übertragungssignale einer Gruppe gleichzeitig in eine entsprechende Anzahl von Kanälen (11, 12) des Datenbusses (8) einspeist, und daß das empfangende Modul (2, 4, 5, 6) unter Verwendung des gleichen Kodes aus jeder Gruppe von parallel empfangenen Übertragungssignalen das jeweilige Informationssignal dekodiert.

3. Datenübertragungssystem nach Anspruch 2, dadurch gekennzeichnet, daß sowohl die Informationssignale als auch die Übertragungssignale impulsförmige Binärsignale sind.

4. Datenübertragungssystem nach Anspruch 3, dadurch gekennzeichnet, daß die Kodierung von Informationssignalen, die vom sendenden Modul (2, 4, 5, 6) in Form von seriellen Binärsignalen zur Übertragung bereitgestellt werden, in der Weise erfolgt, daß zu jedem zu übertragenden Binärpegel ein Taktsignal erzeugt wird, das in einen ersten, als Taktkanal dienenden Kanal (11, 12) des Datenbusses (8) eingespeist wird, während der betreffende Binärpegel von einem zweiten, als Datenkanal dienenden Kanal (11, 12) des Datenbusses (8) übertragen wird, daß das Empfangsmodul (2, 4, 5, 6) jedesmal dann den momentan im Datenkanal (11, 12) übertragenen Binärwert als Wert des Informationssignals übernimmt, wenn es auf dem Taktkanal (11, 12) ein Taktsignal erhält, und daß bei einem Überwechseln des Sende-und/oder Empfangsmoduls vom ersten (Z_{B}) in den zweiten Zustand (Z_{A}) oder umgekehrt dadurch ein Kodewechsel stattfindet, daß Daten-und Taktkanal (11, 12) in ihrer Funktion miteinander vertauscht werden.

5. Datenübertragungssystem nach Anspruch 4, dadurch gekennzeichnet, daß in jedem Kode das Taktsignal eine definierte Impulsflanke ist und daß auf dem Datenkanal ein Wechsel von Binärpegeln des Informationssignals, der einer solchen definierten Impulsflanke des anderen Kodes gleicht, nur dann stattfindet, wenn das Taktsignal einen vorbestimmten Pegel aufweist.

6. Datenübertragungssystem nach einem der Ansprüche 3 bis 5, dadurch gekennzeichnet, daß die Kodierung von Informationssignalen, die vom sendenden Modul (2, 4, 5, 6) in Form von seriellen Binärsignalen zur Übertragung bereitgestellt werden, in der Weise erfolgt, daß für jeden zu übertragenden Binärwert in jeden der zur Übertragung dienenden Kanäle (11, 12) des Datenbusses (8) ein impulsförmiges Binärsignal und/oder ein Binärpegel eingespeist wird, wobei die zeitliche Reihenfolge und/oder Polarität dieser impulsförmigen Binärsignale und/oder Pegel den zu übertragenden Binärwert kodiert.

7. Datenübertragungssystem nach einem der vorhergehenden Ansprüche, dadurch gekennzeichnet, daß die Module (2, 4, 5, 6) seriell in den Datenbus (8) eingeschaltet sind, daß jedes der Module (4, 5, 6), das sich im ersten Zustand (Z_{B}) befindet, alle an seinem Eingang (E) ankommenden Übertragungssignale logisch unverändert an seinen Ausgang (A) weiterleitet, und daß sich jedes der Module (4, 5, 6), das sich im zweiten Zustand (Z_{A}) befindet, an seinem Eingang (E) ankommende Übertragungssignale sowohl logisch unverändert an seinen Ausgang (A) weiterleiten als auch unterdrücken und stattdessen eigene Übertragungssignale über seinen Ausgang (A) in den Datenbus (8) einspeisen kann.

8. Datenübertragungssystem nach einem der vorhergehenden Ansprüche, dadurch gekennzeichnet, daß der Datenbus (8) ringförmig geschlossen ist.

9. Datenübertragungssystem nach Anspruch 8, dadurch gekennzeichnet, daß der Datenbus (8) unidirektional betrieben wird.

10. Datenübertragungssystem nach einem der vorhergehenden Ansprüche, dadurch gekennzeichnet, daß eines der Module (Master 2) einer Vielzahl von anderen Modulen (Slaves 4, 5, 6) des Systems hierarchisch übergeordnet ist.

11. Datenübertragungssystem nach Anspruch 10, dadurch gekennzeichnet, daß nur der Master (2) einen Taktgenerator umfaßt, dessen Taktsignale dadurch als Systemtakt Verwendung finden, daß bestimmte der auf einem der Kanäle (11, 12) bei einer Datenübertragung auftretenden Impulsflanken von den Slaves (4, 5, 6) als Taktsignale verarbeitet werden, wobei in verschiedenen Zuständen (Z_{B}, Z_{A}) des empfangenden Moduls (4, 5, 6) die Impulsflanken auf verschiedenen Kanälen (11, 12) diese Funktion ausüben können.
